(19) Europäisches Patentamt
European Patent Office
Office européen des brevets

(11) Publication number: 0 155 250
B1

(12) EUROPEAN PATENT SPECIFICATION

(45) Date of publication of patent specification: 15.02.89

(51) Int. Cl.$^4$: C 22 B 3/00

(21) Application number: 85850068.9

(22) Date of filing: 04.03.85

# (54) A method for recovering the metal values from materials containing iron.

(30) Priority: 06.03.84 SE 8401238

(43) Date of publication of application:
18.09.85 Bulletin 85/38

(45) Publication of the grant of the patent:
15.02.89 Bulletin 89/07

(84) Designated Contracting States:
AT BE CH DE FR GB IT LI LU NL

(56) References cited:
DE-A-2 102 576
DE-A-2 508 890
DE-A-2 950 425
DE-B-2 754 784
SE-B-7 907 545
US-A-1 185 902
US-A-1 475 843

(73) Proprietor: Boliden Aktiebolag
Box 5508
S-114 85 Stockholm (SE)

(72) Inventor: Wiklund, Johan Elof
Vallisgatan 82
S-252 59 Helsingborg (SE)

(74) Representative: Lundin, Björn-Eric
Boliden Aktiebolag Patents and Trade Marks
Box 81550
S-104 82 Stockholm (SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 155 250 B1

Courier Press, Leamington Spa, England.

## Description

The present invention relates to a method for recovering non-ferrous metal values from ferrous materials of the iron sulphide type and calcines and other conversion products thereof, by sulphating roasting said materials and leaching the sulphated product. The invention is particularly intended for recovering from such materials base metals such as copper, silver, lead and zinc together with precious metals.

In addition to sulphur values iron sulphide ores and concentrates often contain minor quantities of non-ferrous metals, although these may represent non-essential metal values. The products obtained when roasting iron sulphide materials, such as pyrite and pyrrhotite, are known as pyrite cinders or calcines and mainly comprise hematite and/or magnetite. The major part of the non-ferrous material present in the iron sulphate starting material is re-found in the cinder. Sulphur can also be recovered from iron sulphide material of the pyrite kind by decomposition, the resultant product being pyrrhotite calcine (FeS). Natural occurring iron sulphides can also be converted in other ways, e.g. by weathering. Other conversion products can also be worked-up to advantage in accordance with the invention.

In practise, non-ferrous metals have been recovered from pyrite, pyrrhotite and their roasting products in many different ways. One process used for many years, and still used from time to time, is the so-called chlorinating roasting process. In this process, non-ferrous metals in calcined pyrite and like products are converted to substantially water-soluble chloride through the influence of common salt and iron sulphide at a temperature of 450—600°C, while the iron present is converted to insoluble hematite. The process needs to be carried out in a multi-hearth roaster and today is not considered to fulfil modern requirements with regard to environmental care, productivity and handling.

Other processes based on the chlorinating volatilization of the non-ferrous metals have been proposed. Such processes are found described, for example, in US—A—3 896 211 (Mayor, Tord), DE—C—19 34 440 (Montecantini), US—A—3 482 964 (Kowa Seiko), DE—B—10 68 020 and DE—B—19 40 727 (Duisburger Kupferhütte), CA—A—865,647 and WO82/01381 (Boliden Aktiebolag). Processes based on the chlorinating volatilization of non-ferrous metals, however, are encumbered with many technical problems and have not been used hitherto to any great extent.

In addition to the aforementioned processes many other processes have also been proposed, the majority of which have become obsolete or are unusable for one reason or another. One method of recovering non-ferrous metals which has long been known to the art and which has also been applied industrially, comprises converting the non-ferrous metals to sulphates during the roasting of the ferrous material and subsequent leaching-out of the sulphates. The process is generally referred to as a sulphating roasting process and can be applied to both sulphidic and oxidic materials. Sulphating roasting is a far more beneficial process when working-up pyrite cinder, since it is possible when reducing with sulphide to recover, in addition to the sulphates, also non-ferrous materials which are bound by oxidation to hematite as so-called ferrite. One embodiment of a sulphating roasting process is described in Boliden's earlier SE—B—322 632 and corresponding publications, for example CA—A—892 475. Sulphating roasting processes enable non-ferrous metals, such as copper, cobalt, nickel, zinc and silver, to be recovered or extracted from iron bearing sulphide ores or the products obtained when roasting said ores. It is not possible, however, to recover lead or gold or other precious metals by means of the methods above based on sulphating roasting and leaching stages. The possibility of recovering these metals, however, is particularly desirable with regard to the many available pyrite cinders which may contain both gold and other precious metals together with recoverable quantities of lead and other non-ferrous metals and which cannot be worked-up because of the lack of suitable processes herefor. Finds of pyrite and pyrrhotite are known which might be worth mining, provided that the pyrite and the pyrrhotite could be worked-up to recover their precious metal content. Extracting lead from ores by roasting to form sulphate of lead only and leaching with an aqueous chloride solution is disclosed in US—A—1 185 102. The combination of leaching copper and zinc with sulphuric acid solution followed by leaching lead and silver in chloride solution is disclosed in US—A—1 475 843.

The object of the present invention is to provide a method which enables the recovery of the total non-ferrous metal content of ferrous material of the kind mentioned in the aforegoing and which also provides an iron oxide product which can be used in the manufacture of steel, all while avoiding contamination of the environment. The method is characterized to this end by the procedural stages set forth in the following claims.

The method is thus based on sulphating roasting processes either with pyrite cinders produced at remote locations or in connection with roasting furnaces for roasting pyrites or other iron sulphide material, and on the leaching of sulphatized cinders with a chloride solution, followed by precipition of the leached-out metal content and a certain amount of sulphate, and recycling the residual solution (mother liquor) to the leaching stage. Part of the sulphate taken-up in the leaching solution when leaching the sulphatized cinder can be advantageously used for producing in the method chemicals which are capable of being utilized commercially, for example water purifying chemicals.

The roasting process is a sulphating roasting process carried out in one or two stages. Two-stage roasting processes are described, for

example, in the aforementioned Boliden Patent CA—A—892 475. In such processes the cinder produced when roasting pyrite is transferred to a second roasting reactor, in which sulphatization is effected either with the aid of residual sulphur in the cinder which is sulphated with air or with the aid of a sulphating agent supplied totally or in part from an external source, such as sulphuric acid or sulphate solutions. Since the roasting process is autothermal and the cinder is obtained in a hot state, it is necessary to control the temperature with the aid of cooling coils and/or water supplied to the process. When the cinder has been produced in a plant remote from the roaster in which the sulphating roasting process is effected, as with a two-stage sulphating roasting process, the cinder will probably be wet and can contain up to 10% water. Consequently, such cinders should be partially dried, for example with the aid of hot reaction gas, hereinafter discussed, or also sulphated together with a given minor quantity of pyrite, heat from the roaster gas and the sulphated goods being recycled to the process.

The sulphating roasting process is suitably carried out in a fluid-bed furnace provided with means for re-circulating dust and in which provisions are made for maintaining a retention time of sufficient duration for the cinder to convert as completely as possible. The reaction temperature is chosen with respect to an optimum formation of metal salts, while the formation of iron sulphates should be avoided. This is achieved at the temperature of about 600°C at which the equilibrium for the reaction

$$SO_2+\tfrac{1}{2}O_2 \rightleftharpoons SO_3$$

favours the formation of sulphur trioxide ($SO_3$) at such a high reaction rate that there is assured a sufficiently high partial pressure of sulphur trioxide to form metal sulphates, which also facilitate cleaning of the exiting gas or off-gas.

In the case of a charge comprising wet cinder and pyrite, part of the cinder intended for the sulphating stage is suitably charged directly to the fluid bed of the furnace and part to the gas cleaning system. This latter part of the cinder, which reaches to about 40% of the total amount, is introduced at the gas outlet of a first cyclone of the gas cleaning system, for returning calcine to the fluid bed. The temperature of the exiting gas is lowered in this way to about 350°C, and the cinder charge is dried and pre-heated. The exiting gas is passsed through a second cyclone and finally through a hot-Cottrell precipitator for the extraction of dust accompanying the gas, this dust being recycled to the roaster with the exception of a minor amount which is transferred to the subsequent leaching process.

The major part of the sulphated cinder leaves the sulphating reactor from the fluid bed at the reaction temperature. For the sake of simplicity, the sulphating reactor is hereinafter referred to as "the roaster" and the sulphated roasted product is consequently referred to as "the cinder". The cinder taken from the outlet of the roaster is suitably transferred to a two-stage fluid-bed cinder cooler, provided with cooling coils or loops to which incoming roasting air is caused to pass prior to being introduced into the roaster. In this way, heat can be recovered for effecting the sulphating process autothermally while simultaneously cooling the cinder to suit conditions in the subsequent leaching operation. If desired, water can be charged to the cooler in order to remove additional heat from the cinder. The air required for fluidization in the cooler, together with any steam generated, is transferred to the roaster as a secondary air flow.

The gas leaving the roaster through the Cottrell precipitator is substantially free of dust, this dust containing about 30 kg sulphur per ton of ingoing cinder or 60 g sulphur per $nm^3$ dry roaster gas. Since iron oxide has a catalytic effect on the formation of sulphur trioxide from the sulphur dioxide formed, the exiting gas will contain the major part of the sulphur components present in the gas in the form of sulphur trioxide. The weight ratio of sulphur trioxide to sulphur dioxide will thus normally be roughly 2:1. The exiting gas can be advantageously used for manufacturing sulphuric acid.

Thus, because of the high sulphur trioxide content, the major part of the sulphur contained in the gas can be taken up in hot concentrated sulphuric acid. The amount of sulphur dioxide remaining in the gas, however, is much too large to permit the gas to be released to atmosphere and much too low for use in the conventional manufacture of sulphuric acid in accordance with the contact process, unless there is found available for this purpose a sulphuric-acid manufacturing plant based on gas rich in sulphur dioxide.

There is known to the art a number of processes which can be used to convert the sulphur content of the gas to gypsum, which can be dumped or utilized.

In this case, however, it is possible in a prefered embodiment of the invention to use exiting roaster gas for the production of aluminium-sulphate solutions, by introducing aluminium hydrate of a particularly high-reactive quality to the last tower of a series of gas washing towers through which the gas is passed downstream of the Cottrell precipitator. The solution obtained in this last washing stage is transferred to the next washing stage, together with any undissolved substances, and so on to the washing stage lying nearest the Cottrell precipitator with respect to the direction of gas flow.

Thus, the solution obtained flows in countercurrent with the exiting gas, resulting in maximum recovery of sulphur trioxide and sulphur dioxide from the exiting gas. At the same time, the aluminium sulphate solution formed is concentrated to about 8% calculated on its aluminium trioxide content. In order to improve the uptake of sulphur dioxide, so that the gas released to atmosphere contains less than 0.05 per cent by

volume sulphur dioxide, an oxidation agent, such as sodium chlorite, can be added. Each tower is provided with a closed liquid circulation circuit and a settling tank, from which a part of the slurry formed is returned to the tower, while the remainder of the slurry is transferred to the leaching stage for recovery of the aluminium content of said slurry.

Subsequent to having passed the cooling stage incorporated in the roaster furnace, the sulphated cinder will have a temperature of about 300°C. At this temperature the cinder is suitably cooled with recycled solution containing metal chloride, for example ≥ 2 mol/l aluminium chloride. In order to form a slurry which can be readily handled, the weight ratio of liquid to solid material should be approximately 1. This ratio will result in a slurry temperature of about 110°C, which is close to its boiling point. A slurry of suitable composition for the leaching stage in question can be suitably obtained by thickening the slurry and recycling overflow liquid from the thickener to the cooling stage.

Leaching is suitably carried out at elevated pressure and temperature for a period of about one hour at a pH of 2—3. The material is preferably agitated during the leaching process. An oxidizing agent is added to the leaching solution. Preferred oxidation agents are chlorine gas, oxygen gas, hydrogen peroxide, chlorates and/or hypochlorites, while sodium chlorate is particularly preferred. The leaching liquid will comprise the chloride-containing solution remaining subsequent to precipitating the leached-out metal content by cementation. In addition to chloride ions the leaching liquid will also contain metal cations, depending upon the metal or metals used for cementing out the metal content of the leaching solution. When cementation of said metal content is effected with the aid of aluminium powder, the leaching solution may contain up to 2 mol/l aluminium chloride, or even more. The chloride solution must be concentrated to a level at which there is obtained an increase in the boiling point of such high magnitude that the solution can be filtered in vacuum filters without boiling. If zinc, iron or lead are used for the cementation process, the recycled solution, as hereinafter explained, may contain both zinc and other cations, for example aluminium, magnesium and sodium.

The iron content of the cinder will not dissolve under the leaching conditions chosen, while base metals and precious metals will form chloride complexes exemplified by the following reactions:

$$PbSO_4 + n\ Cl^- = PbCl_n^{-(n-2)} + SO_4^{2-}$$

$$^{m-}3\ Ag_2SO_4 + 6\ (m+1)Cl^- = 6\ AgCl_{m+1}^{m-} + 3\ SO_4^{2-}$$

where *n* may be 3 or 4
and *m* is 1, 2 or 3.

Corresponding formation of complex ions are formed for the other metals in question.

If arsenic is present in the cinder, iron arsenate will be formed during the leaching process and is thus effectively fixated in the leaching product. This is important with respect to the risk of the formation of the extremely toxic substance arsenic hydride (arsine, $AsH_3$) in conjunction with counterstream cementation of the metals.

Since some cinders are relatively rich in potassium, it is important to avoid build-ups of this element in the system in those cases when all of the chloride solution is recycled in the system. This fixation of the potassium present is achieved by the formation of potassium jarosite $K_2Fe_4(SO_4)_6(OH)_{12}$.

Subsequent to the leaching stage, the slurry formed, comprising iron oxides and leaching solution, is transferred to a thickener in which the solid/liquid ratio is adjusted to suit the subsequent operations. The thickened slurry is transferred from the thickener to a filter, while the overflow liquid is recycled to the cooling stage. In view of the high temperature of the slurry to be filtered the necessity of washing the filter cake substantially free from soluble material, it is important that the correct filter apparatus is chosen. A modern filter press is capable of handling large quantities of solids and also provides relatively good washing results. The liquid obtained when washing the filter cake is used to ajust the concentration of the leaching solution, i.e. the pregnant solution, and a part of this solution is used as make-up liquid for replacing losses caused by vaporization of the hot solutions in the system. The washing water is suitably heated prior to use in the washing stage. Since the resultant filter cake will comprise about 20% water, and since water is required to compensate losses due to evaporation and is also required to produce the resultant aluminium chloride product, the water requirement shall include sufficient water to enable the filter cake to be washed effectively.

The metals present in the pregnant solution are cemented out therefrom in accordance with the invention by adding metal to said solution. According to one embodiment of the invention aluminium metal is used, while according to further embodiments zinc metal, optionally in combination with lead, and iron metal are used. The metals are suitably used in a fine-grain form, for example in powder form.

It may seem strange to use the relatively expensive metal aluminium for precipitating out the often less expensive base metals. The reason for using aluminium, however, is that it forms useful and valuable products such as aluminium sulphate and aluminium chloride of such quality as to enable the products to be used for water purifying purposes. It can be shown that the value of the aluminium ions in said products lies close to the price of aluminium scrap, even when using kaolin, bauxite or aluminium hydroxide as starting materials in the commercial production of said chemicals. The weight of the aluminium required to precipitate zinc is, moreover, only 27.5% of the amount of zinc required and only

8.7% of the amount of lead required for the same purpose. The figure in respect of copper is 28.3%.

When cementing the base metals with aluminium, the resultant cement zinc can be used for recovering copper and lead, while the resultant cement lead can be used for recovering copper and precious metals. Local conditions and the properties of the pregnant solutions, however, will often determine the most economical method of carrying out the cementation process. The same amount of aluminium metal, however, will be required, since corresponding amounts of zinc and lead used in the first stages of a multistage cementation process will be required to again cement-out with aluminium.

The cementation process must be carried out at the correct pH for the solution and it may be necessary to add hydrogen chloride. The cementation process is carried out most suitably in three part stages, wherewith more precious metals, such as copper, silver and gold for example, are recovered in the first stage, which is effected in an acid environment, while lead and metals related to lead are recovered in a second stage, and zinc in the last stage. Subsequent to the three cementation stages there remains a solution depleted of the recovered metals, here called the mother liquor, which may contain aluminium chloride and aluminium sulphate or corresponding zinc compounds. A part of this solution is removed from the process, said part necessarily containing all the soluble sulphates in the cinder and also the total aluminium metal supplied to the process. That part of the solution removed from the process can be sold as a water purifying agent, subsequent to optionally being concentrated. It is possible, however, to precipitate out all of the sulphate-ion content, or a part thereof, so that both the liquid recycled to the process and that sold as a water purifying agent will be substantially free from sulphates. If that part of the liquid removed from the process is deprived of only a part of its sulphate content there is obtained a solution of polyaluminium sulphate and aluminium chloride. If a sulphate-free solution is preferred, it is necessary to add additional chlorides in the form of calcium chloride and/or hydrogen chloride in conjunction with the sulphate precipitation process.

One condition for selecting aluminium metal for recovery of the base metals is that a market is to be found for the aluminium chloride solution and/or the aluminium sulphate solutions as water treatment chemicals. This market is growing and will become more and more important in the majority of countries. One other condition is that the price gap between aluminium and the base metals does not widen excessively. The aluminium metal used may comprise low-grade scrap. The price and availability of such scrap is vital to the economy of the process.

In many cases, however, it is more suitable to carry out the cementation process with iron, which may be charged to the system in the form, for example, of a commercially available iron powder. As with the case when using aluminium, the more precious metals such as copper, silver and gold are precipitated in a first cementation stage, while lead and metals related thereto are cemented out in a second stage. Any zinc present remains in the solution and is later recovered therefrom in the form of zinc metal with the aid of an electrowinning process. The iron added to the cementation process can be precipitated by adding zinc sulphide concentrate, which results in a surprisingly efficient precipitation of iron, this precipitate being returned to the roasting stage together with any zinc accompanying the precipitate, and can then be removed together with the iron oxide product. Subsequent to precipitation of the iron, the solution is neutralized with lime or dolomite, wherewith a precipitate containing calcium and zinc can be separated out, while the chloride solution containing magnesium is recycled to the cooling stage. The zinc is separated from the gypsum by digesting the same with sulphuric acid and recovering the zinc by electrowinning in the above indicated manner. The sulphuric acid formed during the electrowinning process is utilized for digesting the zinc.

Alternatively, the iron can be precipitated out after neutralizing the solution for the precipitation of an iron zinc precipitate, which is dissolved in sulphuric acid, whereafter ammonia and zinc oxide are added to precipitate the iron in the form of an ammonium jarosite precipitate, which can be readily filtered off. Subsequent to filtering off the jarosite, the residual zinc can be recovered from the solution by electrowinning, while the jarosite is recycled to the sulphating stage for recovery of iron oxide.

As beforementioned, it is also possible, and at times advantageous to utilize zinc as the precipitating agent. The zinc present in the final solution is recovered by precipitation as zinc hydroxide, using lime for example as the precipitating agent. The mother liquor, which this case may contain every cation which does not form sulphates of low solubility, is recycled to the leaching process, suitably via the cooling stage, in which the solution may form the coolant. Suitable cations in this context are aluminium, magnesium and sodium. Part of the cations, together with chloride ions, will be lost as a result of incomplete washing of the formed filter cake. These losses must be compensated for. This is suitably effected by adding hydrogen chloride to the first cementation stage, while the cation losses are made up when precipitating the zinc and the sulphate by adding lime, which normally contains sufficient magnesium. The recycled solution will thus comprise mainly magnesium chloride and water.

For the purpose of separating the gypsum formed from the zinc precipitate there is used a mineral acid, such as sulphuric acid, and the resultant zinc sulphate solution can be worked-up to produce metallic zinc in accordance with established processes.

The invention is further illustrated in Figures

1—4 of the accompanying drawings, these figures having the form of flow sheets of preferred embodiments of the method.

Figure 1 is a flow sheet of a method in which material is subjected to a sulphating roasting process and recovered metals are precipitated out with aluminium powder, and in which the roaster gas is purified by supplying aluminium hydrate to a washing system.

Figure 2 is a flow sheet of a method in which recovered metals are precipitated out with zinc.

Figures 3 and 4 are two different flow sheets of methods in which recovered metals are precipitated out with iron.

For the sake of clarity, these flow sheets are drawn to show material and reactants supplied to the system on the left, while exiting products are shown on the right. The figures also shown how mother liquor is recycled to the cooling stage of respective processes, and how liquid from thickeners and filters is recycled to the cooling stage, together with liquid from the gas washing towers. Since all the process stages have been discussed in the aforegoing, it is not thought necessary to describe the flow sheets in any further detail.

**Claims**

1. A method for recovering non-ferrous metal values from ferrous materials of the type iron sulphides and decomposition products and roasting products thereof which comprises the steps of

a) sulphating roasting said materials,

b) leaching the sulphated material with a chloride-containing aqueous solution while supplying an oxidation agent in an amount selected so that any arsenic present is bound as iron arsenate, so that any alkali metals present are bound as jarosites, and so that a redox potential suitable for binding readily solubilized metal chloride complexes is obtained;

c) separating the leached material obtained in stage b) from the solution and washing the separated material with water, and removing said material in the form of an iron oxide product;

d) freeing the solution separated in stage c) from valuable metals by cementation, and by separating the cemented-out metal content and recovering said content;

e) precipitating sulphate ions in the solution obtained in stage d) as gypsum, separating the gypsum and precipitating out any residual valuable metal ions in a suitable manner, and separating said ions; and

f) recycling at least a part of the solution obtained in stage e) as a leaching liquid for the sulphated material.

2. A method according to claim 1, characterized by cooling the sulphated material while adding leaching liquid to form a slurry at a temperature of between 60°C and the boiling point of the slurry.

3. A method according to claim 1 or claim 2, characterized by cementing the valuable metals by adding one or more metals of the group aluminium, lead, zinc or iron.

4. A method according to any one of claims 1—3, characterized by using as the oxidation agent at least one of the substances taken from the group chlorine gas, oxygen gas, hydrogen peroxide, chlorates and hypochlorites.

5. A method according to claim 1 and claim 2, characterized by carrying out the leaching process in stage b) at elevated pressure and temperature, which are adjusted by controlling the amount ratio of solid substance:leaching liquid in the cooling process.

6. A method according to claim 1 and claim 3, in which the cementation process is effected with aluminium, characterized by carrying out the cementation process in several stages, with a separation step after each stage, wherewith any copper, silver and gold present is first precipitated out after adjusting the pH to about 3, whereafter any lead and zinc present are precipitated out in separate stages; and by effecting the precipitation of gypsum in stage e) to a residual sulphate content in the solution so adjusted that a mixture of polyaluminium sulphate and aluminium chloride is formed in the solution.

7. A method according to claim 1 and claim 3, in which the cementation process is carried out with zinc, characterized in that subsequent to separating the last cemented metal, gypsum and zinc hydroxide are precipitated out by adding calcium compound and any cation capable of building soluble sulphate, whereafter formed gypsum-hydroxide-precipitate is separated and the solution recycled in the process as leaching liquid.

8. A method according to claim 7, characterized by digesting the separated gypsum-hydroxide precipitate with hydrochloric acid and/or sulphuric acid to dissolve zinc hydroxides, and by removing zinc in the form of zinc chloride and/or zinc sulphate.

9. A method according to claim 1 and claim 3, in which the cementation process is carried out with iron, characterized in that subsequent to said cementation process, iron is precipitated out as jarosite, and the jarosite separated and recycled to the roasting process.

10. A method according to claim 1 and claim 3, in which the cementation process is carried out with iron, characterized in that subsequent to said cementation process, iron is precipitated out with zinc sulphide and returned to the roasting process.

**Patentansprüche**

1. Verfahren zur Gewinnung von Nichteisenmetall aus Eisenmaterialien von Typ der Eisensulfide und Zersetzungsprodukte und Röstprodukte derselben mit den Stufen, bei denen man

a) das Material sulfatierend röstet,

b) das sulfatierte Material mit einer chloridhaltigen wäßrigen Lösung auslaugt, während man ein Oxidationsmittel in einer solchen ausgewählten Menge zuführt, daß vorhandenes Arsen als Eisenarsenat gebunden wird, daß vorhandene Alkalimetalle als Jarosite gebunden werden und daß ein für das Binden leicht löslich gemachter Metallchloridkomplexe geeignetes Redoxpotential erhalten wird;

c) das in der Stufe b) erhaltene ausgelaugte Material von der Lösung abtrennt und das abgetrennte Material mit Wasser wäscht und das Material in der Form eines Eisenoxidproduktes entfernt,

d) die in der Stufe c) abgetrennte Lösung von wertvollen Metallen durch Ausfällung und durch Abtrennung des ausgefällten Metallgehaltes und Gewinnung dieses Gehaltes befreit,

e) Sulfationen in der in Stufe d) erhaltenen Lösung als Gips ausfällt, den Gips abtrennt und restliche wertvolle Metallionen in geeigneter Weise ausfällt und diese Ionen abtrennt und

f) wenigstens einen Teil der in der Stufe e) erhaltenen Lösung als Auslaugflüssigkeit für das sulfatierte Material zurückführt.

2. Verfahren nach Anspruch 1, dadurch gekennzeichnet, daß man das sulfatierte Material unter Zugabe von Auslaugflüssigkeit zur Bildung eines Schlammes bei einer Temperatur zwischen 60°C und dem Siedepunkt des Schlammes kühlt.

3. Verfahren nach Anspruch 1 oder Anspruch 2, dadurch gekennzeichnet, daß man die wertvollen Metalle durch Zugabe eines oder mehrerer Metalle der Gruppe Aluminium, Blei, Zink oder Eisen ausfällt.

4. Verfahren nach einem der Ansprüche 1 bis 3, dadurch gekennzeichnet, daß man als das Oxidationsmittel wenigstens eine der Substanzen aus der Gruppe Chlorgas, Sauerstoffgas, Wasserstoffperoxid, Chlorate und Hypochlorite, verwendet.

5. Verfahren nach Anspruch 1 und Anspruch 2, dadurch gekennzeichnet, daß man das Auslaugverfahren in der Stufe b) bei erhöhtem Druck und erhöhter Temperatur durchführt, die durch Steuerung des Mengenverhältnisses von Festsubstanz zu Auslaugflüssigkeit in dem Kühlverfahren eingestellt werden.

6. Verfahren nach Anspruch 1 und Anspruch 3, in welchem das Ausfällverfahren mit Aluminium durchgeführt wird, dadurch gekennzeichnet, daß man das Ausfällverfahren in mehreren Stufen mit einer Trennstufe nach jeder Stufe durchführt, wobei vorhandenes Kupfer, Silber und Gold zunächst nach Einstellung des pH-Wertes auf etwa 3 ausgefällt wird wonach vorhandenes Blei und Zink in getrennten Stufen ausgefällt werden, und daß man die Ausfällung von Gips in der Stufe e) bis zu einem Restsulfatgehalt in der Lösung, der so eingestellt wird, daß ein Gemisch von Polyaluminiumsulfat und Aluminiumchlorid in der Lösung gebildet wird, durchführt.

7. Verfahren nach Anspruch 1 und Anspruch 3, in welchem das Ausfällverfahren mit Zink durchgeführt wird, dadurch gekennzeichnet, daß man nach der Abtrennung des letzten ausgefällten Metalles Gips und Zinkhydroxid durch Zugabe von Calciumverbindung und irgendeinem Kation, das zur Bildung von löslichem Sulfat in der Lage ist, ausfällt, wonach gebildeter Gipshydroxidniederschlag abgetrennt wird und die Lösung als Auslaugflüssigkeit in das Verfahren zurückgeführt wird.

8. Verfahren nach Anspruch 7, dadurch gekennzeichnet, daß man den abgetrennten Gipshydroxidniederschlag mit Chlorwasserstoffsäure und/oder Schwefelsäure unter Auflösen von Zinkhydroxiden aufschließt und Zink in der Form von Zinkchlorid und/oder Zinksulfat enternt.

9. Verfahren nach Anspruch 1 und Anspruch 3, bei welchem das Ausfällverfahren mit Eisen durchgeführt wird, dadurch gekennzeichnet, daß nach dem Ausfällverfahren Eisen als Jarosit ausgefällt wird und der abgetrennte Jarosit zu dem Röstverfahren zurückgeführt wird.

10. Verfahren nach Anspruch 1 und Anspruch 2, bei dem das Ausfällverfahren mit Eisen durchgeführt wird, dadurch gekennzeichnet, daß nach dem Ausfällverfahren Eisen mit Zinksulfid ausgefällt und zu dem Röstverfahren zurückgeführt wird.

**Revendications**

1. Procédé de récupération de métaux non ferreux intéressants au départ de matières ferreuses du type des sulfures de fer, de leurs produits de décomposition et de leurs produits de grillage, qui comprend les phases suivantes:

(a) le grillage sulfatant de ces matières;

(b) la lixiviation de la matière sulfatée avec une solution aqueuse contenant un chlorure, tout en alimentant un agent oxydant en une quantité choisie pour que tout arsenic présent quelconque soit lié sous forme d'arséniate de fer, de manière que les métaux alcalins quelconques présents soient liés sous forme de jarosites et de manière à obtenir un potentiel redox convenant pour lier facilement les complexes de chlorure métallique solubilisés;

(c) la séparation de la matière lixiviée obtenue dans la phase (b) à partir de la solution, et le lavage de la matière séparée à l'eau, avec ensuite séparation de cette matière sous la forme d'un produit d'oxyde de fer;

(d) la libération de la solution séparée dans la phase (c) des métaux intéressants par cémentation et par séparation de la teneur en métaux cémentés et récupération de leur contenu;

(e) la précipitation des ions sulfate se trouvant dans la solution obtenue dans la phase (d) sous forme de gypse, la séparation du gypse et la précipitation des ions métalliques résiduels quelconques intéressants d'une manière appropriée, et la séparation de ces ions; et

(f) le recyclage d'au moins une partie de la solution obtenue dans la phase (e) à titre de liquide de lixiviation pour la matière sulfatée.

2. Procédé suivant la revendication 1, caractérisé par le refroidissement de la matière sulfatée, tandis que l'on ajoute du liquide de lixiviation pour former une suspension à une température comprise entre 60°C et le point d'ébullition de cette suspension.

3. Procédé suivant la revendication 1 ou 2, caractérisé par la cémentation des métaux intéressants par addition d'un ou plusieurs métaux du groupe comprenant l'aluminium, le plomb, le

zinc ou le fer.

4. Procédé suivant l'une quelconque des revendications 1 à 3, caractérisé par l'utilisation, comme agent oxydant, d'au moins l'une des substances prises dans le groupe comprenant le chlore gazeux, l'oxygène gazeux, le peroxyde d'hydrogène, les chlorates et les hypochlorites.

5. Procédé suivant la revendication 1 et la revendication 2, caractérisé par la mise en oeuvre du procédé de lixiviation dans la phase (b) à une pression et une température élevées, qui sont ajustées en agissant sur le rapport quantitatif entre la substance solide et le liquide de lixiviation dans le procédé de refroidissement.

6. Procédé suivant la revendication 1 et la revendication 3, dans lequel le procédé de cémentation est réalisé avec de l'aluminium, caractérisé en ce qu'il consiste à réaliser l'opération de cémentation en plusieurs étapes, avec une phase de séparation après chaque étape, tout cuivre, argent et or présents étant d'abord précipité après ajustement du pH à environ 3, puis tout plomb et zinc présents sont précipités au cours d'étapes distinctes, et en ce qu'on effectue la précipitation du gypse dans la phase (3) pour obtenir dans la solution une teneur de sulfate résiduel ajustée de manière à avoir dans la solution un mélange de sulfate polyaluminique et de chlorure d'aluminium.

7. Procédé suivant la revendication 1 et la revendication 3, dans lequel l'opération de cémentation est réalisée avec du zinc, caractérisé en ce qu'après séparation du dernier métal cémenté, le gypse et l'hydroxyde de zinc sont précipités par addition d'un composé de calcium et de tout cation quelconque capable de former un sulfate soluble, puis le précipité formé de gypse et d'hydroxyde est séparé, et la solution est recyclée au procédé sous la forme de liquide de lixiviation.

8. Procédé suivant la revendication 7, caractérisé par la digestion du précipité de gypse-hydroxyde séparé avec de l'acide chlorhydrique et/ou de l'acide sulfurique pour dissoudre les hydroxydes de zinc, et par la séparation du zinc sous la forme de chlorure de zinc et/ou de sulfate de zinc.

9. Procédé suivant la revendication 1 et la revendication 3, dans lequel l'opération de cémentation est réalisée avec du fer, caractérisé en ce qu'après l'opération de cémentation, le fer est précité sous forme de jarosite, et la jarosite est séparée et recyclée au procédé de grillage.

10. Procédé suivant la revendication 1 et la revendication 3, dans lequel l'opération de cémentation est réalisée avec du fer, caractérisé en ce qu'après l'opération de cémentation, le fer est précipité avec du sulfure de zinc en renvoyé au procédé de grillage.

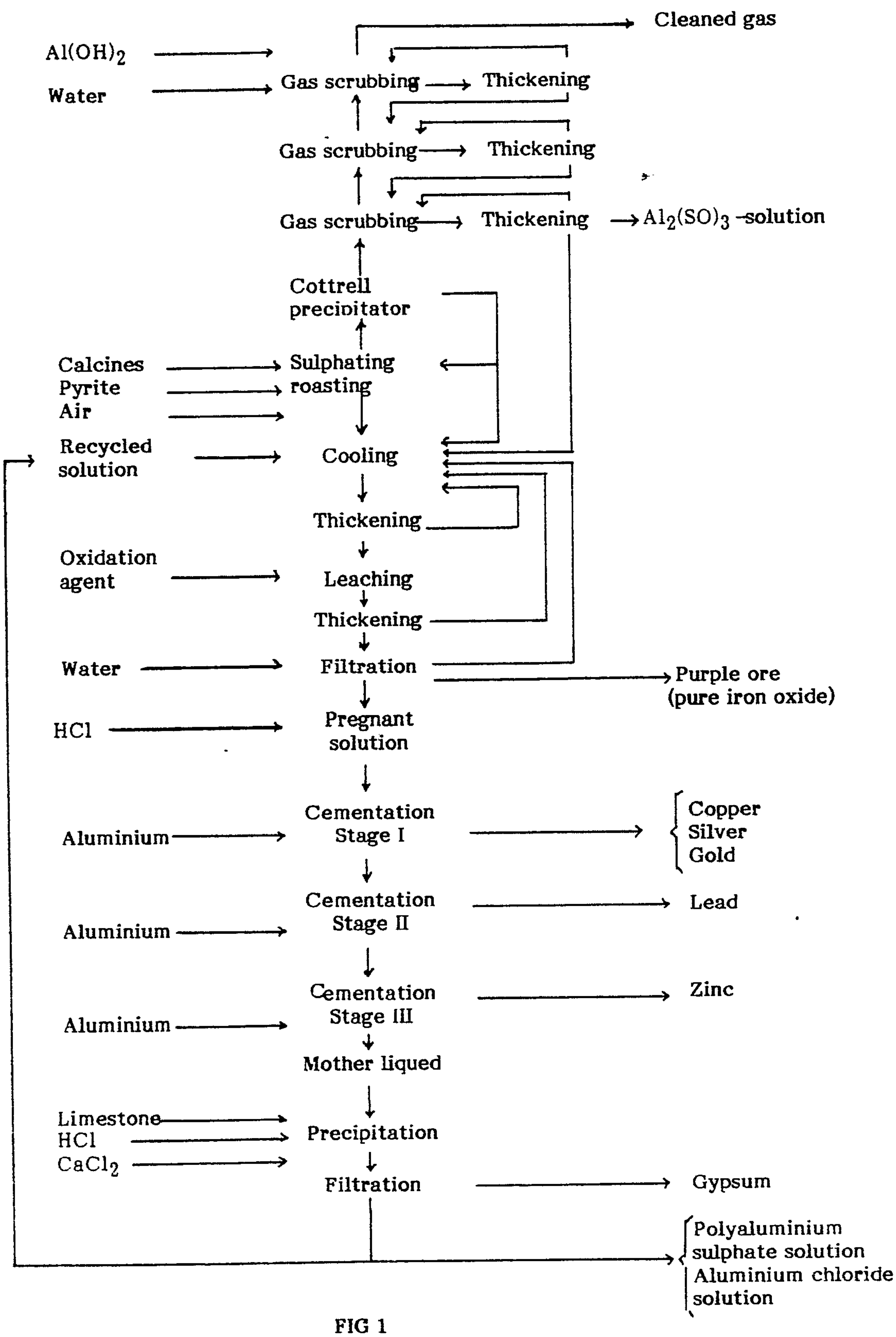

Cleaned gas
Al(OH)2
Water
Gas scrubbing
Thickening
Gas scrubbing
Thickening
Gas scrubbing
Thickening
Al2(SO)3 -solution
Cottrell precipitator
Calcines
Pyrite
Air
Sulphating roasting
Recycled solution
Cooling
Thickening
Oxidation agent
Leaching
Thickening
Water
Filtration
Purple ore (pure iron oxide)
HCl
Pregnant solution
Aluminium
Cementation Stage I
Copper
Silver
Gold
Aluminium
Cementation Stage II
Lead
Aluminium
Cementation Stage III
Zinc
Mother liqued
Limestone
HCl
CaCl2
Precipitation
Filtration
Gypsum
Polyaluminium sulphate solution
Aluminium chloride solution


FIG 1

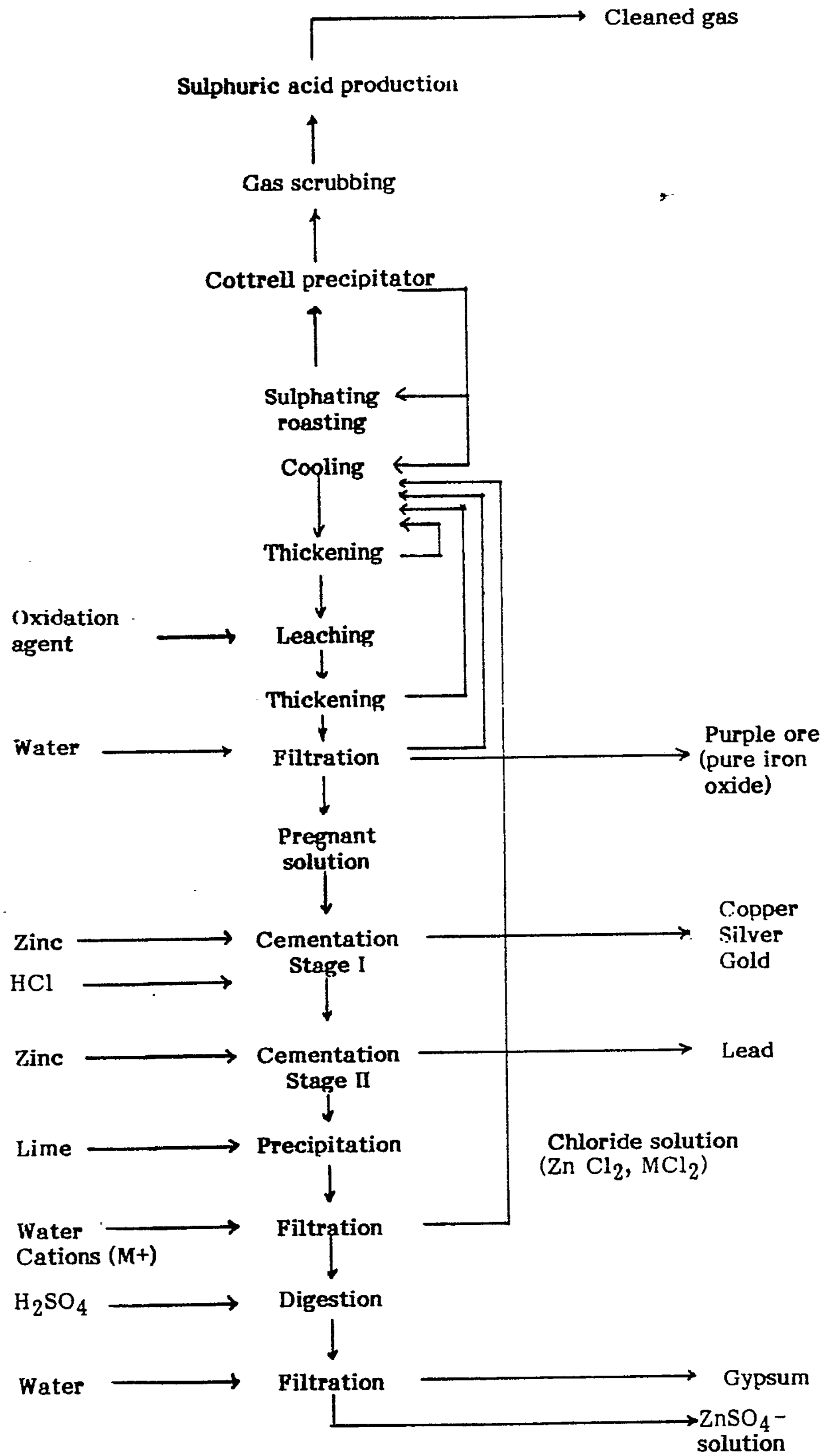
Cleaned gas
Sulphuric acid production
Gas scrubbing
Cottrell precipitator
Sulphating roasting
Cooling
Thickening
Oxidation agent
Leaching
Thickening
Water
Filtration
Purple ore (pure iron oxide)
Pregnant solution
Zinc
HCl
Cementation Stage I
Copper
Silver
Gold
Zinc
Cementation Stage II
Lead
Lime
Precipitation
Chloride solution ($ZnCl_2$, $MCl_2$)
Water
Cations (M+)
Filtration
$H_2SO_4$
Digestion
Water
Filtration
Gypsum
$ZnSO_4$-solution

FIG 2

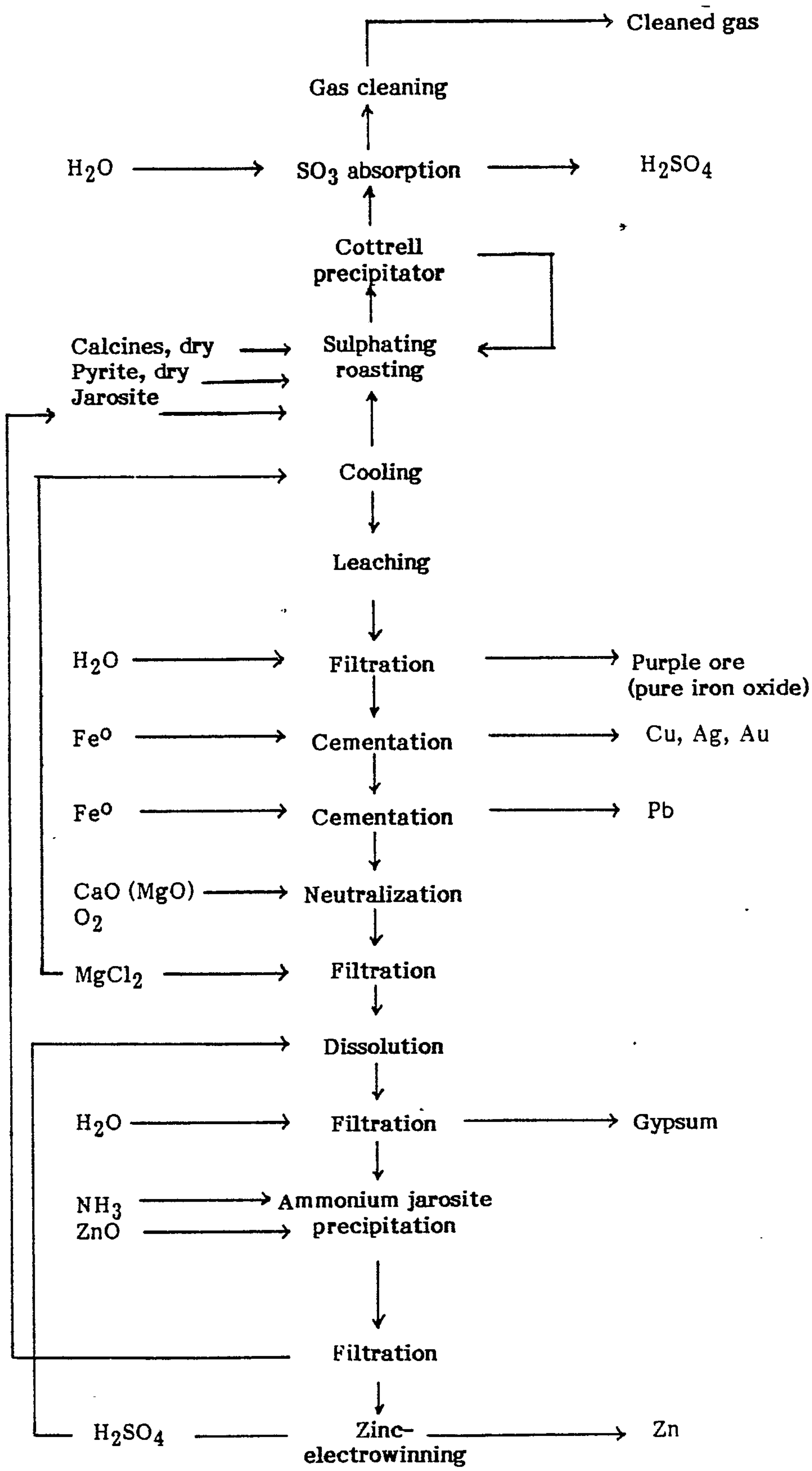
Cleaned gas
Gas cleaning
$H_2O$
$SO_3$ absorption
$H_2SO_4$
Cottrell precipitator
Calcines, dry
Pyrite, dry
Jarosite
Sulphating roasting
Cooling
Leaching
$H_2O$
Filtration
Purple ore (pure iron oxide)
$Fe^o$
Cementation
Cu, Ag, Au
$Fe^o$
Cementation
Pb
CaO (MgO)
$O_2$
Neutralization
$MgCl_2$
Filtration
Dissolution
$H_2O$
Filtration
Gypsum
$NH_3$
ZnO
Ammonium jarosite precipitation
Filtration
$H_2SO_4$
Zinc-electrowinning
Zn

FIG 3

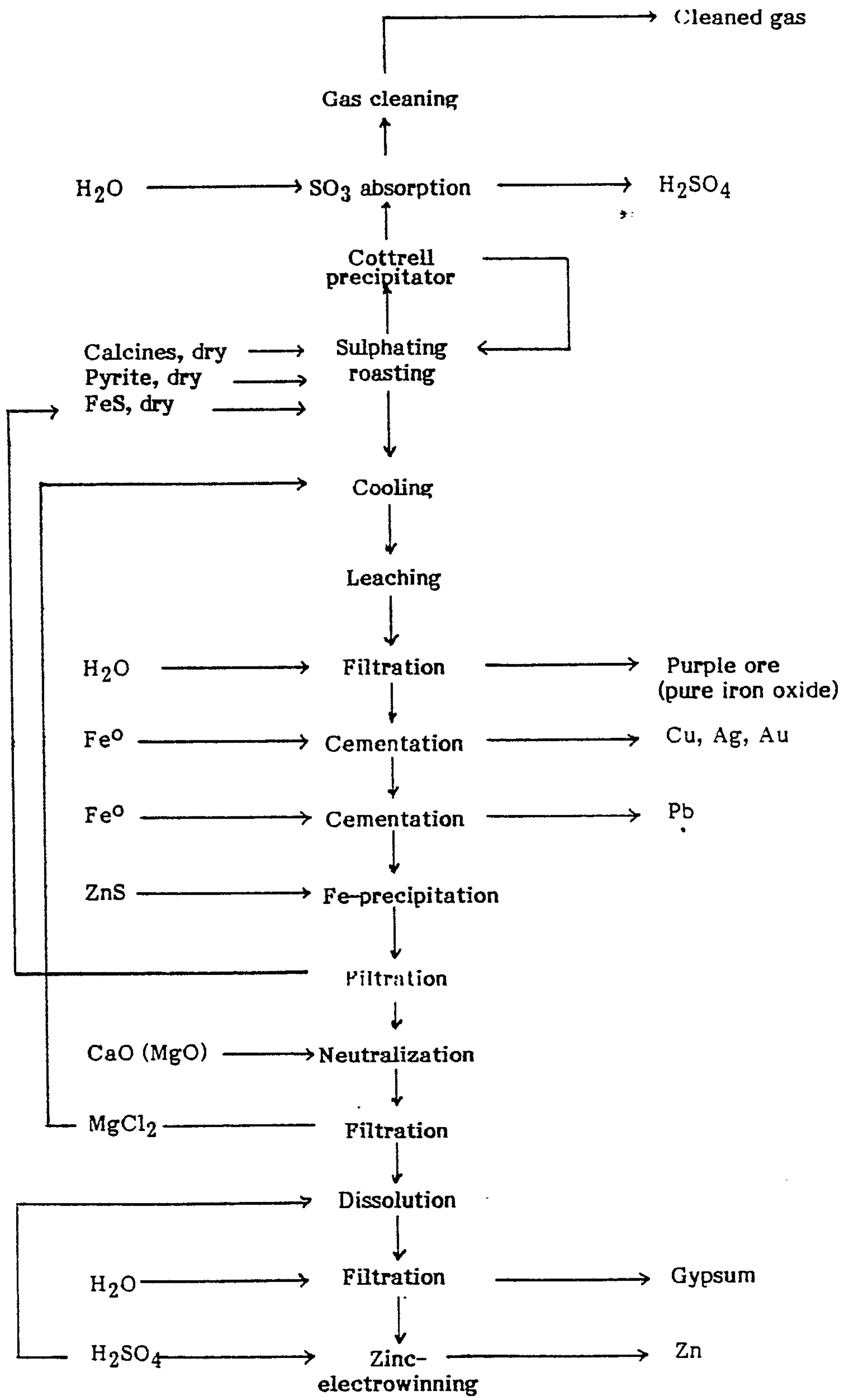
Cleaned gas
Gas cleaning
$H_2O$
$SO_3$ absorption
$H_2SO_4$
Cottrell precipitator
Calcines, dry
Pyrite, dry
FeS, dry
Sulphating roasting
Cooling
Leaching
$H_2O$
Filtration
Purple ore (pure iron oxide)
$Fe^o$
Cementation
Cu, Ag, Au
$Fe^o$
Cementation
Pb
ZnS
Fe-precipitation
Filtration
CaO (MgO)
Neutralization
$MgCl_2$
Filtration
Dissolution
$H_2O$
Filtration
Gypsum
$H_2SO_4$
Zinc-electrowinning
Zn

FIG 4